# EUROPEAN PATENT SPECIFICATION

(11) **EP 1 355 953 B1**
(45) Date of publication and mention of the grant of the patent: **05.01.2011**
(21) Application number: 02716011.8
(22) Date of filing: 24.01.2002
(51) Int. Cl.: C08F 4/645, C08F 4/6592, C08F 10/10, C08F 4/62

(54) **PROCESS FOR MAKING HIGH MOLECULAR WEIGHT ISOBUTYLENE POLYMERS**
PROZESS ZUR HERSTELLUNG VON ISOBUTYLENPOLYMEREN MIT HOHEM MOLEKULARGEWICHT
PROCEDE DE PRODUCTION DE POLYMERES D'ISOBUTYLENE A POIDS MOLECULAIRE ELEVE

(30) Priority: 24.01.2001 CA 2332203
(43) Date of publication of application: 29.10.2003
(73) Proprietor: Lanxess Inc., Sarnia, Ontario N7T 7M2 (CA)
(72) Inventor: BAIRD, Michael, C., Kingston, Ontario K7L 2P3 (CA); DREWITT, Mark ,J, Kingston, Ontario K7L 4A5 (CA); KUMAR, K., Rajesh, Vancouver, BC V6T 2B5 (CA)
(74) Representative: Zobel, Manfred
(86) International application number: PCT/CA2002/000084
(87) International publication number: WO 2002/059161

(56) References cited:
- EP-A- 0 891 991
- WO-A-00/04061
- US-A- 5 296 433
- US-A- 6 008 307
- US-A- 6 121 395

## Description

### TECHNICAL FIELD

The present invention relates to a cationic polymerisation process for the preparation of high molecular weight isobutylene-based polymers.

### BACKGROUND ART

Cationic polymerization of olefins is known in the art.

Conventionally, cationic polymerization is effected using a catalyst system comprising: (i) a Lewis acid, (ii) a tertiary alkyl initiator molecule containing a halogen, ester, ether, acid or alcohol group, and, optionally, (iii) an electron donor molecule such as ethyl acetate. Such catalysts systems have been used for the so-called "living" and "non-living" carbocationic polymerization of olefins.

Catalyst systems based on halogens and/or alkyl-containing Lewis acids, such as boron trichloride and titanium tetrachloride, use various combinations of the above components and typically have similar process characteristics. For the so-called "living" polymerization systems, it is conventional for Lewis acid concentrations to exceed the concentration of initiator sites by 16 to 40 times in order to achieve 100 percent conversion in 30 minutes (based upon a degree of polymerization equal to 890) at -75° to -80°C.

Examples of the so-called "living" polymerization systems are taught in United States patents 4,929,683 and United States patent 4,910,321, the contents of each of which are incorporated herein by reference. Specifically, these patents teach the use of Lewis acids in combination with organic acids, organic esters or organic ethers to form cationic polymerization initiators that also create a complex counter anion. Apparently, the complex counter anion does not assist in or cause proton elimination.

In the so-called "non-living" polymerization systems, high molecular weight polyisobutylenes are prepared practically only at low temperatures (-60 to -100°C) and at catalyst concentrations exceeding one catalyst molecule per initiator molecule. In practice, many of these catalyst systems are applicable only in certain narrow temperature regions and concentration profiles.

In recent years, a new class of catalyst systems utilising compatible non-co-ordinating anions in combination with cyclopentadienyl transition metal compounds (also referred to in the art as "metallocenes") has been developed. See, for example, any one of:
published European patent application 0,277,003A;
published European patent application 0,277,004;
United States patent 5,198,401; and
published International patent application WO92/00333.

The use of ionising compounds not containing an active proton is also known. See, for example, any one of:
published European patent application 0,426,637A; and
published European patent application 0,573,403A.

US 5,448,001 discloses a carbocationic process for the polymerization of isobutylene which utilizes a catalyst system comprising, for example, a metallocene catalyst and a borane.

WO 00/04061 discloses a cationic polymerization process which is conducted at subatmospheric pressure in the presence of a catalyst system such as Cp*TiMe₃ (the "initiator") and B(C₆F₅)₃ (the "activator"). Such a system generates a reactive cation and a "non-coordinating anion" (NCA). Using such a catalyst system a polymer having desirable molecular weight properties may be produced in higher yields and at higher temperatures than by conventional means, thus lowering capital and operating costs of the plant producing the polymer.

The wide range of NCAs disclosed in WO 00/04061 includes aluminum, boron, phosphorous and silicon compounds, including borates and bridged di-boron species.

The polymerization of isobutylene with small amounts of isoprene, to produce butyl rubber, presents unique challenges. Specifically, as is well known in the art, this polymerization reaction is highly exothermic and it is necessary to cool the reaction mixture to approximately -95°C in large scale production facilities. This requirement has remained, notwithstanding advances in the art relating to the development of novel reactor designs and/or novel catalyst systems.

Further, it is the case that the copolymers so produced have markedly lower molecular weights than homopolymers prepared under similar conditions. This is because the presence of isoprene in the monomer feed results in chain termination by B-H elimination.

It would be desirable to be able to obtain high molecular weight isobutylene-based polymers, and in particular isobutylene-based copolymers, in high yield, at relatively high temperatures (as compared to the methods of the art) and under more environmentally-friendly conditions. This has not been demonstrated to date.

### SUMMARY OF THE INVENTION

Amongst the large number of NCAs disclosed in WO 00/04061 there is disclosed a class of NCAs having the following structure :

[M'-Z-M"]^{d-}

wherein M' and M" may be the same or different and each has the formula M(Q₁ ... Qₙ), wherein M is a metal or metalloid; and Q₁ to Qₙ are, independently, bridged or unbridged hydride radicals, dialkylamido radicals, alkoxide and aryloxide radicals, hydrocarbyl and substituted-hydrocarbyl radicals, halocarbyl and substituted-halocarbyl radicals and hydrocarbyl- and halocarbyl-substituted organometalloid radicals, with the proviso that not more than one of Q₁ to Qₙ may be a halide radical; and
Z is a µ-bonded bridging species selected from the group comprising OR⁻, SR⁻, SeR⁻, NR₂⁻, PR₂⁻, AsR₂⁻, SbR₂⁻, F, Cl⁻, Br⁻ and I⁻, wherein R is selected from the group consisting of hydrogen, C₁-C₄₀ alkyl, C₁-C₄₀ cycloalkyl, C₅-C₄₀ aryl, halogen-substituted derivatives thereof and heteroatom-substituted derivatives thereof, and is an integer greater than or equal to 1.

We have now found that careful selection of a subset of the large family of such bridged NCAs disclosed in WO 00/04061 allows the preparation of a catalyst system having unexpected advantages over the systems disclosed therein.

Specifically, bridged compounds wherein M is selected from the group consisting of B, Al, Ga and In, which may be prepared by the addition of pre-determined amounts of a third component, (a "co-initiator") to the appropriate activator, which, in combination with the initiator gives a catalyst system which allows the leads to a new catalyst system which allows the preparation of isobutylene polymers having even higher molecular weights than those disclosed in WO 00/04061. Further, these polymers are produced in very high yields. Suitable co-initiators include alcohols, thiols, carboxylic acids, thiocarboxylic acids and whereby the coinitiator has at least 8 carbon atoms or is at least partially fluorinated.

Such a system not only produces a polymer having a high molecular weight and associated narrow molecular weight distribution, but also results in greater monomer conversion. The polymerization is carried out at subatmospheric pressure, and has the further advantage that it can be carried out at higher temperatures than previously thought possible.

Further, the reaction can be carried out in solvents which are more environmentally friendly than those of the art.

### DETAILED DESCRIPTION OF THE INVENTION

Thus, the present process is directed to the polymerization of isobutylene

As mentioned hereinabove, the present process is particularly advantageous in the preparation of butyl rubber polymers. The term "butyl rubber" as used throughout this specification is intended to denote polymers prepared by reacting a major portion, e.g., in the range of from 70 to 99.5 parts by weight, usually 85 to 99.5 parts by weight of an isomonoolefin, such as isobutylene, with a minor portion, e.g., in the range of from 30 to 0.5 parts by weight, usually 15 to 0.5 parts by weight, of a multiolefin, e.g., a conjugated diolefin, such as isoprene or butadiene, for each 100 weight parts of these monomers reacted. The isoolefin, in general, is a C₄ to C₈ compound, e.g., isobutylene, 2-methyl-1-butene, 3-methyl-1-butene, 2-methyl-2-butene and 4-methyl-1-pentene. The preferred monomer mixture for use in the production of butyl rubber comprises isobutylene and isoprene. Optionally, an additional olefinic termonomer such as styrene, α-methylstyrene, p-methylstyrene, chlorostyrene, pentadiene and the like may be incorporated in the butyl rubber polymer. See, for example, any one of:
United States patent 2,631,984;
United States patent 5,162,445; and
United States patent 5,886,106.

The present process comprises the use of a cationic polymerization system comprising an initiator and an activator which, in combination which is a reactive cation and an activator, which is a compatible non-coordinating anion. Non-limiting examples of initiators useful in the practice of this invention are disclosed in PCT application WO 00/04061-A1.

For clarity, the formulae presented below depict the catalyst components in the "ionic" state. Of course, those of skill in the art will readily realise that many of these components are not stable as depicted and are obtained from a neutral stable form. For example, the species: 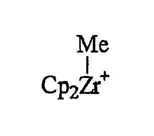 typically does not exist in this state alone. Rather, it is formed by reacting Cp₂ZrMe₂ with another compound that will abstract a Me group. This convention of describing the components in "ionic" form is used for descriptive purposes only and should not be construed as limiting in any way.

The following references teach the neutral stable forms, and the synthesis of the cyclopentadienyl transition metal compositions and the NCA:
International patent application WO 92/00333-A1;
European patent application 0,129,368A1;
European patent application 0,551,277
European patent application 0,520,732;
European patent application 0,277,003A1;
European patent application 0,277,004A1;
European patent application 0,426,637A;
European patent application 0,573,403A;
European patent application 0,520,732A;
European patent application 0,495,375A.
United States patent 5,017,714;
United States patent 5,055,438;
United States patent 5,153,157; and
United States patent 5,198,401.

For a description of compounds capable of producing the ionic species in situ see either of European patent applications 0,500,944A and 0,570,982A. These references teach in situ processes comprising the reaction of alkyl aluminum compounds with dihalosubstituted metallocene compounds prior to or with the addition of activating anionic compounds.

The neutral stable forms of the substituted carbocations and synthesis thereof are described in United States patent 4,910,321, United States patent 4,929,683 and European patent application 0,341,012. In general, the neutral stable form of such carbocations is typically represented by the formula: 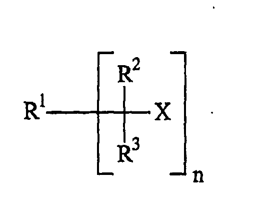 wherein R¹, R², and R³ are a variety of substituted or unsubstituted alkyl or aromatic groups or combinations thereof, n is the number of initiator molecules and is preferably greater than or equal to 1, even more preferably in the range of from 1 to 30, and X is the functional group on which the Lewis acid affects a change to bring about the carbocationic initiating site. This group is typically a halogen, ester, ether, alcohol or acid group depending on the Lewis acid employed.

For a discussion of stable forms of the substituted silylium and synthesis thereof, see F.A. Cotton, G. Wilkinson, Advanced Inorganic Chemistry, John Wiley and Sons, New York 1980. Likewise for stable forms of the cationic tin, germanium and lead compositions and synthesis thereof, see Dictionary of Organometallic compounds, Chapman and Hall New York 1984.

Initiators are selected from different classes of cations and cation sources. Some preferred classes are:
(A) cyclopentadienyl transition metal complexes and derivatives thereof;
(B) substituted carbocations;
(C) substituted silylium;
(D) compositions capable of generating a proton as further described below; and
(E) cationic compositions of germanium, tin or lead.

With reference to class (A), preferred cyclopentadienyl metal derivatives may be selected from the group consisting of compounds that are a mono-, bis- or tris-cyclopentadienyl derivative of a transition metal selected from Groups 4, 5 or 6 of the Periodic Table of Elements. Preferred compositions include mono- cyclopentadienyl (Mono-Cp) or bis-cyclopentadienyl (Bis-Cp) Group 4 transition metal compositions, particularly zirconium, titanium and/or hafnium compositions.

Preferred cyclopentadienyl derivatives are transition metal complexes selected from the group consisting of: 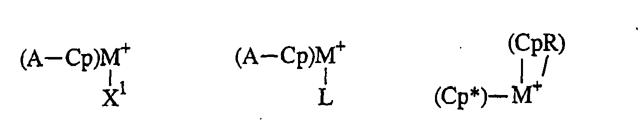 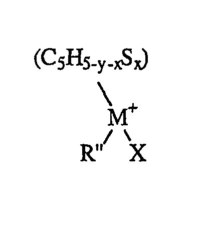 wherein:
(A-Cp) is either (Cp)(Cp*) or Cp-A'-Cp*;
Cp and Cp* are the same or different cyclopentadienyl rings substituted with from 0 to 5 substituent groups S, each substituent group S being, independently, a radical group selected from the group comprising hydrocarbyl, substituted-hydrocarbyl, halocarbyl, substituted-halocarbyl, hydrocarbyl-substituted organometalloid, halocarbyl-substituted organometalloid, disubstituted boron, disubstituted pnictogen, substituted chalcogen or halogen radicals, or Cp and Cp* are cyclopentadienyl rings in which any two adjacent S groups are joined forming a C₄ to C₂₀ ring system to give a saturated or unsaturated polycyclic cyclopentadienyl ligand;
R is a substituent on one of the cyclopentadienyl radicals which is also bonded to the metal atom;
A' is a bridging group, which group may serve to restrict rotation of the Cp and Cp* rings or (C₅H_{5-y-x}Sₓ) groups;
M is a Group 4,5, or 6 transition metal;
y is 0 or 1;
(C₅H_{5-y-x}Sₓ) is a cyclopentadienyl ring substituted with from 0 to 5 S radicals;
x is from 0 to 5;
R" is a hydrocarbyl group;
X and X¹ are independently a hydride radical, hydrocarbyl radical, substituted hydrocarbyl radical, halocarbyl radical, substituted halocarbyl radical, and hydrocarbyl- and halocarbyl-substituted organometalloid radical, substituted pnictogen radical, or substituted chalcogen radicals; and
L is an olefin, diolefin or aryne ligand, or a neutral Lewis base.

Other cyclopentadienyl compounds that may be used in the cationic polymerization catalyst system are described in:
European patent application 0,551,277A;
United States patent 5,055,438;
United States patent 5,278,119;
United States patent 5,198,401; and
United States patent 5,096,867.

With reference to class (B), a preferred group of reactive cations consists of carbocationic compounds having the formula: 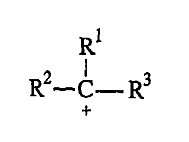 wherein R¹, R² and R³, are independently hydrogen, or a linear, branched or cyclic aromatic or aliphatic group, with the proviso that only one of R¹, R² and R³ may be hydrogen. Preferably, none of R¹, R² and R³ are H. Preferably, R¹, R² and R³, are independently a C₁ to C₂₀ aromatic or aliphatic group. Non-limiting examples of suitable aromatic groups may be selected from the group consisting of phenyl, tolyl, xylyl and biphenyl. Non-limiting examples of suitable aliphatic groups may be selected from the group consisting of methyl, ethyl, propyl, butyl, pentyl, hexyl, octyl, nonyl, decyl, dodecyl, 3-methylpentyl and 3,5,5-trimethylhexyl.

With reference to class (C), a preferred group of reactive cations consisting of substituted silylium cationic compounds having the formula: 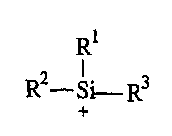 wherein R¹, R² and R³, are independently hydrogen, or a linear, branched or cyclic aromatic or aliphatic group, with the proviso that only one of R¹, R² and R³ may be hydrogen. Preferably, none of R¹, R² and R³ are H. Preferably, R¹, R² and R³ are, independently, a C₁ to C₂₀ aromatic or aliphatic group. More preferably, R¹, R² and R³ are independently a C₁ to C₈ alkyl group. Examples of useful aromatic groups may be selected from the group consisting of phenyl, tolyl, xylyl and biphenyl. Non-limiting examples of useful aliphatic groups may be selected from the group consisting of methyl, ethyl, propyl, butyl, pentyl, hexyl, octyl, nonyl, decyl, dodecyl, 3-methylpentyl and 3,5,5-trimethylhexyl. A particularly preferred group of reactive substituted silylium cations may be selected from the group consisting of trimethylsilylium, triethylsilylium and benzyldimethylsilylium. Such cations may be prepared by the exchange of the hydride group of the R¹R²R³Si-H with the NCA, such as Ph₃C⁺B(pfp)₄- yielding compositions such as R¹R²R³SiB(pfp)₄ which in the appropriate solvent obtain the cation.

With reference to class (D), the source for the cation may be any compound that will produce a proton when combined with the non-co-ordinating anion or a composition containing a non co-ordinating anion. Protons may be generated from the reaction of a stable carbocation salt which contains a non-co-ordinating, non-nucleophilic anion with water, alcohol or phenol to produce the proton and the corresponding by-product. Such reaction may be preferred in the event that the reaction of the carbocation salt is faster with the protonated additive as compared with its reaction with the olefin. Other proton generating reactants include thiols, carboxylic acids, and the like. Similar chemistries may be realised with silylium type catalysts. In another embodiment, when low molecular weight polymer product is desired an aliphatic or aromatic alcohol may be added to inhibit the polymerization.

Another method to generate a proton comprises combining a Group 1 or Group 2 metal cation, preferably lithium, with water, preferably in a wet, non-protic organic solvent, in the presence of a Lewis base that does not interfere with polymerization. A wet solvent is defined to be a hydrocarbon solvent partially or fully saturated with water. It has been observed that when a Lewis base, such as isobutylene, is present with the Group 1 or 2 metal cation and the water, a proton is generated. In a preferred embodiment the non-co-ordinating anion is also present in the "wet" solvent such that active catalyst is generated when the Group 1 or 2 metal cation is added.

With reference to class (E), another preferred source for the cation is substituted germanium, tin or lead cations. Preferred non-limiting examples of such cations include substances having the formula: 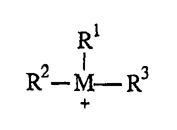 wherein R¹, R² and R³, are independently hydrogen, or a linear, branched or cyclic aromatic or aliphatic group, and M is germanium, tin or lead with the proviso that only one of R¹, R² and R³ may be hydrogen. Preferably, none of R¹, R² and R³ are H. Preferably, R¹, R² and R³ are, independently, a C₁ to C₂₀ aromatic or aliphatic group. Non-limiting examples of useful aromatic groups may be selected from the group consisting of phenyl, tolyl, xylyl and biphenyl. Non-limiting examples of useful aliphatic groups may be selected from the group consisting of methyl, ethyl, propyl, butyl, pentyl, hexyl, octyl, nonyl, decyl, dodecyl, 3-methylpentyl and 3,5,5-trimethylhexyl.

The NCA component of the catalyst system is generated by reaction of an activator compound of formula:

(R₁R₂R₃)M

wherein:
M is B, Al, Ga or In; R₁, R₂ and R₃ are independently selected bridged or unbridged halide radicals, dialkylamido radicals, alkoxide and aryloxide radicals, hydrocarbyl and substituted-hydrocarbyl radicals, halocarbyl and substituted-halocarbyl radicals and hydrocarbyl and halocarbyl-substituted organometalloid radicals, with the proviso that not more than one such R group may be a halide radical;
   with a "co-initiator" which is an alcohol, a thiol, a carboxylic acid, a thiocarboxylic acid. The co-initiators are those having at least 8 carbon atoms, for example nonanol, octadecanol and octadecanoic acid, or are those compounds which are at least partially fluorinated, for example hexafluoropropanol, hexafluoro-2-phenyl-2-propanol and heptadecafluorononanol.

In a preferred embodiment R₁ and R₂ are the same or different aromatic or substituted-aromatic hydrocarbon radicals containing from about 6 to about 20 carbon atoms and may be linked to each other through a stable bridging group; and R₃ is selected from the group consisting of hydride radicals, hydrocarbyl and substituted-hydrocarbyl radicals, halocarbyl and substituted-halocarbyl radicals, hydrocarbyl- and halocarbyl-substituted organometalloid radicals, disubstituted pnictogen radicals, substituted chalcogen radicals and halide radicals.

In a particularly preferred embodiment, M is B and R₁, R₂ and R₃ are each a (C₆F₅) group.

Without wishing to be bound by any particular theory, it is thought that the activator compound and the co-initiator together form a bridged species of formula:

[(R₁R₂R₃)M]₂-µZ]⁻

where Z represents the radical resulting from abstraction of the acidic proton from the co-initiator (for example, if the co-initiator is an alcohol (ROH) Z represents an alkoxy radical (OR)). At least 0.01 moles of co-initiator is employed per mole of activator, the maximum amount of co-initiator employed being 1 mole per mole of activator. More preferably, the ratio of co-initiator to boron compound is in the range of from 0.1 : 1 to 1:1, even more preferably in the range of from 0.25 : 1 to 1 : 1, and still more preferably in the range of from 0.5 : 1 to 1 : 1. Most preferably, 0.5 moles of co-initiator is employed per mole of activator, as this is the theoretical amount of co-initiator required to convert all of the activator originally present to the bridged di-boron species.

The present process is conducted at sub-atmospheric pressure. Preferably, the pressure at which the present process is conducted is less than 100 kPa, more preferably less than 90 kPa, even more preferably in the range of from 0.00001 to 50 kPa, even more preferably in the range of from 0.0001 to 40 kPa, even more preferably in the range of from 0.0001 to 30 kPa, most preferably in the range of from 0.0001 to 15 kPa.

The present process may be conducted at a temperature higher than -80°C, preferably at a temperature in the range of from -80°C to 25°C, more preferably at a temperature in the range of from -40°C to 25°C, even more preferably at a temperature in the range of from -30°C to 25°C, even more preferably at a temperature in the range of from -20°C to 25°C, most preferably at a temperature in the range of from 0°C to 25°C.

The use of the co-initiators disclosed herein in a catalyst system for the preparation of isobutylene-based polymers has some unexpected advantages. The polymers so produced have high molecular weights, higher even than those disclosed in WO 00/04061-A1. This is even true in the case of isobutylene-based copolymers. Usually the introduction of a second monomer (such as isoprene (IP)) results in a copolymer having a molecular weight very much lower than that of a homopolymer produced under the same conditions, but this is not the case here - whilst the molecular weight of the isobutylene copolymer is still less than that of a homopolymer prepared under the same conditions, the drop in molecular weight is, surprisingly, significantly less than would be expected. Further, these polymerisation reactions are very fast and yields are very high, with monomer conversions of 100% being achieved in homopolymerisation reactions. Similar conversions were seen in copolymerisations in polar solvents. Yields in toluene were higher in the presence of co-initiators, especially in the presence of fluorinated alcohols.

Embodiments of the present invention will be described with reference to the following Examples which are provided for illustrative purposes only and should not be used to limit the scope of the invention.

### EXAMPLES

All glassware was dried by heating at 120°C for at least 12 hours before being assembled. Nitrogen was purified by passing sequentially over heated BASF catalyst and molecular sieves. Dichloromethane was dried by refluxing over calcium hydride under nitrogen, toluene by refluxing over sodium-benzophenone under nitrogen, and both solvents were freshly distilled and then freeze-pump-thaw degassed prior to use. When necessary, solvents were stored over activated molecular sieves under nitrogen.

The diene monomer isoprene (IP) was purified by passing through a column to remove p-tertbutylcatechol, titrated with n-BuLi (1.6 M solution in hexanes) and distilled under vacuum prior to use. This was then stored at -30°C in a nitrogen filled dry box.

Isobutylene (IB) was purified by passing through two molecular sieve columns and condensed into a graduated finger immersed in liquid nitrogen. The IB was allowed to melt, the volume noted (∼8 to 24 mL) and then refrozen by immersing in the liquid nitrogen bath. The system was evacuated to 10⁻³ torr, the IB finger isolated and the system placed under a nitrogen atmosphere.

Solutions of Cp*TiMe₃ (Cp*= η⁵-pentamethylcyclopentadienyl; Me = methyl; usually 11 mg, 0.05 mmol; recrystallized from pentane) and a mixture of B(C₆F₅)₃ (usually 25 mg, 0.05 mmol; sublimed), and octadecanol (usually 13 mg, 0.05 mmol, sublimed) both in 5 mL of solvent, were added and frozen in liquid nitrogen sequentially, giving an initiator to monomer ratio of approximately 1:1500. Both the solution of initiator and IB was brought to the desired temperature (using a cooling bath at about -30°C) prior to the addition of the IB.

In some Examples an amount of diene equivalent to ∼1- 3 mole% of the amount of IB was added to the IB finger prior to the condensation of the IB, this being done in a nitrogen-filled dry box.

Solutions of the olefin(s) and initiator system were generally stirred as long as possible under a static vacuum and at the predetermined temperature (by "static vacuum", it is meant that the system was closed at this point and the pressure essentially was the vapour pressure of the remaining IB and solvent at the reaction temperature). When dichloromethane was use as the solvent copious amounts of polymeric materials generally began to precipitate after about 2 minutes. When toluene was the solvent a viscous solution was formed and stirring was maintained. Reactions were terminated after approximatelyl hour by precipitation into methanol (greater than 1 L). The precipitated material was dissolved in hexanes and the solvent flashed off under reduced pressure. The solid white polymer so obtained was dried to constant weight.

Table 1 shows the results of a series of isobutylene homopolymerisation reactions.

**Table 1 homopolymerisation**

| **Example** | **Initiator** | **Activator** | **Co-initiator** | **Activator: Co-initiator** | **Solvent (mL)** | **IB (mL)** | **Conversion (%)** | **Mw (g/mol)** | **MWD** |
|---|---|---|---|---|---|---|---|---|---|
| | | | | | | | | | |
| 1 | Cp*TiMe₃ | B(C₆F₅)₃ | - | | CH₂Cl₂(15) | 9.5 | 100 | 504230 | 2.2 |
| 2 | Cp*ZrMe₃ | " | - | | CH₂Cl₂ (10) | 5.7 | 84 | 157300 | 2.2 |
| 3 | Cp*HfMe₃ | " | - | | CH₂Cl₂ (15) | 11.5 | 100 | 341550 | 4.7 |
| 4 | Cp*TiMe₃ | " | - | | Toluene (15) | 13 | 26 | 510600 | 1.7 |
| 5 | Cp*ZrMe₃ | " | - | | Toluene (15) | 9.5 | 7.2 | 431540 | 1.9 |
| 6 | Cp*HfMe₃ | " | - | | Toluene (15) | 12.5 | 12.5 | 227000 | 1.7 |
| | | | | | | | | | |
| 7 | Cp-TiMe₃ | " | Octadecanol | 1 : 1 | CH₂Cl₂ (15) | 21.1 | 100 | 708350 | 2.3 |
| 8 | Cp*TiMe₃ | " | Octadecanol | 1 : 1 | Toluene (15) | 9.8 | 25 | 1129000 | 1.9 |
| 9 | Cp*TiMe₃ | " | Heptadecafluoro -nonanol | 1 : 1 | CH₂Cl₂ (15) | 13 | 100 | 518710 | 1.8 |
| 10 | Cp*TiMe₃ | " | Heptadecafluoro -nonanol | 1 : 1 | Toluene (15) | 9.5 | 83 | 529320 | 2.0 |
| 11 | Cp*TiMe₃ | " | Octadecanoic acid | 2 : 1 | CH₂Cl₂ (15) | 9.7 | 85 | 858600 | 2.1 |
| 12 | Cp*TiMe₃ | " | Octadecanoic acid | 2:1 | Toluene (15) | 10.2 | 38 | 582710 | 1.4 |
| | | | | | | | | | |
| 13 | Cp*TiMe₃ | B(C₆F₅)₃ | Octadecane-thiol | 1 : 1 | CH₂Cl₂ (15) | 12.0 | 100 | 864200 | 1.7 |
| 14 | Cp*TiMe₃ | " | Octadecane-thiol | 1 : 1 | Toluene (15) | 12.0 | 15 | 502950 | 1.6 |
| 15 | Cp*TiMe₃ | " | Octadecane-thiol | 2 : 1 | Toluene (15) | 12.0 | 34 | 1013050 | 1.6 |
| 16 | Cp*TiMe₃ | " | Octadecane-thiol | 1 : 1 | Toluene (15) | 12 | 21 | 472015 | 1.7 |
| 17 | Cp*TiMe₃ | " | Octadecane-thiol | 2 : 1 | Toluene (15) | 12 | 36 | 669700 | 1.8 |
| 18 | Cp*TiMe₃ | " | Octadecane-thiol | 1 : 1 | CH₃Cl (25) | 12 | 100 | 467530 | 2.4 |
| 19 | Cp*TiMe₃ | " | Octadecane-thiol | 2 : 1 | CH₃Cl (20) | 12 | 100 | 883900 | 1.8 |
| | | | | | | | | | |
| 20 | Cp*HfMe₃ | " | Heptadecafluoro -nonanol | 1 : 1 | CH₂Cl₂ (15) | 12.5 | 100 | 353470 | 3.0 |
| 21 | Cp*HfMe₃ | " | Heptadecafluoro -nonanol | 1:1 | Toluene (15) | 13 | 92 | 233600 | 1.2 |

Table 2 shows the results of a series of isobutylene/isoprene copolymerisation reactions.

**Table 2 copolymerisation**

| **Example** | **Initiator** | **Activator Co-initiator** | | **Activator : Co-initiator** | **Solvent** | **IP (mg)** | **IB (mL)** | **Conversion (%)** | **Mw (g/mol)** | **MWD** |
|---|---|---|---|---|---|---|---|---|---|---|
| | | | | | | | | | | |
| 22 | Cp*TiMe₃ | B(C₆F₅)₃ | - | | CH₂Cl₂ (15) | 120 | 12.5 | 100 | 289500 | 1.8 |
| 23 | Cp*HfMe₃ | | - | | CH₂Cl₂ (15) | 130 | 13.0 | 100 | 157290 | 3.5 |
| 24 | Cp*TiMe₃ | | - | | Toluene (15) | 160 | 12.5 | 9 | 168700 | 1.5 |
| | | | | | | | | | | |
| 25 | Cp*TiMe₃ | | Heptadecafluoro -nonanol | 1 :1 | CH₂Cl₂ (15) | 115 | 12.5 | 100 | 735400 | 1.7 |
| 26 | Cp*TiMe₃ | | Heptadecafluoro -nonanol | 1 :1 | CH₂Cl₂ (15) | 200 | 13.0 | 93 | 370300 | 2.6 |
| 27 | Cp*TiMe₃ | | Heptadecafluoro -nonanol | 1 :1 | CH₂Cl₂ (15) | 300 | 13.0 | 82 | 300270 | 2.4 |
| 28 | Cp*TiMe₃ | | Heptadecafluoro -nonanol | 1 :1 | CH₂Cl₂ (15) | 115 | 13 | 100 | 583600 | 2.3 |
| 29 | Cp*TiMe₃ | | Heptadecafluoro -nonanol | 1 :1 | CH₂Cl₂ (15) | 235 | 13 | 80 | 396470 | 2.1 |
| 30 | Cp*TiMe₃ | | Heptadecafluoro -nonanol | 1 :1 | CH₂Cl₂ (15) | 300 | 13 | 92 | 405080 | 2.1 |
| 31 | Cp*TiMe₃ | | Heptadecafluoro -nonanol | 1 :1 | Toluene (15) | 110 | 11.5 | 52 | 205288 | 1.5 |
| 32 | Cp*TiMe₃ | | Heptadecafluoro -nonanol | 1 :1 | Toluene (15) | 110 | 11.5 | 23 | 166400 | 1.6 |
| 33 | Cp*TiMe₃ | B(C₆F₅)₃ | Octadecanol | 1 :1 | Toluene (15) | 68 | 9.5 | 41 | 324380 | 1.9 |
| 34 | Cp*TiMe₃ | ' | Octadecanoic acid | 2 :1 | CH₂Cl₂ (15) | 120 | 6.9 | 100 | 494700 | 2.7 |
| 35 | Cp*TiMe₃ | ' | Octadecanoic acid | 1 :1 | CH₂Cl₂ (15) | 115 | 13.0 | 40 | 342280 | 1.8 |
| 36 | Cp*TiMe₃ | ' | Octadecane-thiol | 1 :1 | CH₂Cl₂ (15) | 235 | 12.0 | 25 | 386550 | 1.9 |
| 37 | Cp*TiMe₃ | ' | Octadecane-thiol | 1 :1 | CH₃Cl (40) | 240 | 12 | 97 | 615560 | 1.6 |
| 38 | Cp*TiMe₃ | ' | Octadecane-thiol | 1 :1 | CH₃Cl (50) | 230 | 12 | 100 | 366560 | 2.4 |
| 39 | Cp*TiMe₃ | ' | Octadecane-thiol | 1 :1 | CH₃Cl (50) | 230 | 12 | 100 | 443560 | 1.6 |
| | | | | | | | | | | |
| 40 | Cp*HfMe₃ | ' | Octadecanol | 1 :1 | CH₂Cl₂ (15) | 130 | 13.0 | 27 | 311650 | 1.7 |
| 41 | Cp*HfMe₃ | ' | Hexafluoro-propan-2-ol | 1 :1 | CH₂Cl₂ (15) | 110 | 13.0 | 100 | 232750 | 3.5 |
| 42 | Cp*HfMe₃ | ' | Hexafluoro-2-phenyl-propan-2-ol | 1 :1 | CH₂Cl₂ (15) | 120 | 13.0 | 81 | 376380 | 2.6 |
| 43 | Cp*HfMe₃ | ' | Octadecanoic acid | 1 :1 | CH₂Cl₂ (15) | 115 | 13.0 | 93 | 423240 | 1.5 |

The results support the conclusion that conducting the polymerization of isobutylene at sub-atmospheric pressure using the catalyst system disclosed herein results in the production of a polymer having a higher Mw when compared to carrying out the polymerization in the absence of co-initiator. Similarly, the results support the conclusion that conducting the co-polymerization of isobutylene/isoprene under similar conditions results in the production of a copolymer having a higher Mw when compared to conducting the polymerization or copolymerisation of isobutylene in the absence of the co-initiator.

The above embodiments of the disclosed invention detail experiments which were carried out at subatmospheric pressure. Without intending to be bound by any particular theory, it is thought that carrying out the reactions at subatmospheric pressure permits excellent heat transfer to take place within the reaction medium, thus preventing the occurrence and/or build-up of "hot-spots", which are known to be detrimental. Thus, any means which would facilitate excellent heat transfer (for example, highly efficient cooling, improved reactor design) is encompassed by the invention disclosed herein.

With respect to U.S. patent practise and all other jurisdictions providing for this possibility, all publications, patents and patent applications referred to herein are incorporated by reference in their entirety to the same extent as if each individual publication, patent or patent application was specifically and individually indicated to be incorporated by reference in its entirety.

## Claims

1. A process for the preparation of high molecular weight isobutylene-based polymers by polymerizing a cationically polymerizable olefin comprising the step of polymerizing isobutylene as at least one cationically polymerizable olefin at a subatmospheric pressure in the presence of a cationic polymerization catalyst system which comprises an initiator and an activator, which together form a reactive cation and non-co-ordinating anion, the activator being prepared by the reaction of a compound of formula :
(R₁R₂R₃)M
wherein:
M is B, Al, Ga or In;
R₁, R₂ and R₃ are independently selected bridged or unbridged halide radicals, dialkylamido radicals, alkoxide and aryloxide radicals, hydrocarbyl and substituted-hydrocarbyl radicals, halocarbyl and substituted- halocarbyl radicals and hydrocarbyl and halocarbyl-substituted organometalloid radicals, with the proviso that not more than one such R group may be a halide radical;
with a co-initiator, the co-initiator being selected from the group consisting of an alcohol, a thiol, a carboxylic acid, a thiocarboxylic acid and whereby the co-initiator has at least 8 carbon atoms or is at least partially fluorinated.

2. A process according to claim 1 wherein M is B.

3. A process according to claim 1 wherein the ratio of co-initiator to (R₁R₂R₃)M is in the range of from 0.01 : 1 to 1 : 1.

4. A process according to claim 3 wherein the ratio of co-initiator to (R₁R₂R₃)M is in the range of from about 0.1 : 1 to about 1:1.

5. A process according to claim 1 wherein the reactive cation is a cyclopentadienyl transition metal complex.

6. A process according to claim 7 wherein the transition metal complex is a compound selected from the group consisting of : 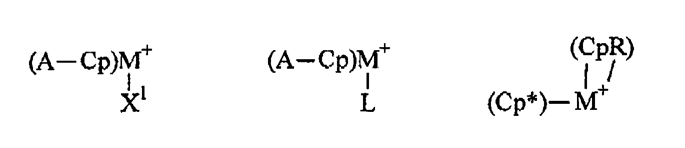 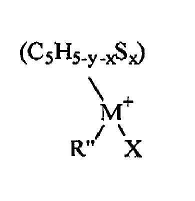 wherein:
(A-Cp) is either (Cp)(Cp*) or Cp-A'-Cp*;
Cp and Cp* are the same or different cyclopentadienyl rings substituted with from 0 to 5 substituent groups S, each substituent group S being, independently, a radical group selected from the group comprising hydrocarbyl, substituted-hydrocarbyl, halocarbyl, substituted- halocarbyl, hydrocarbyl-substituted organometalloid, halocarbyl- substituted organometalloid, disubstituted boron, disubstituted pnictogen, substituted chalcogen or halogen radicals, or Cp and Cp* are cyclopentadienyl rings in which any two adjacent S groups are joined forming a C₄ to C₂₀ ring system to give a saturated or unsaturated polycyclic cyclopentadienyl ligand;
R is a substituent on one of the cyclopentadienyl radicals which is also bonded to the metal atom;
A' is a bridging group, which group may serve to restrict rotation of the Cp and Cp* rings or (C₅H_{5-y-x}Sₓ) groups;
M is a Group 4,5, or 6 transition metal;
y is O or 1;
(C₅H_{5-y-x}Sₓ) is a cyclopentadienyl ring substituted with from 0 to 5 S radicals;
x is from 0 to 5;
R" is a hydrocarbyl group;
X and X¹ are independently a hydride radical, hydrocarbyl radical, substituted hydrocarbyl radical, halocarbyl radical, substituted halocarbyl radical, and hydrocarbyl- and halocarbyl-substituted organometalloid radical, substituted pnictogen radical, or substituted chalcogen radicals; and
L is an olefin, diolefin or aryne ligand, or a neutral Lewis base.

7. A process according to claim 1 wherein R₁, R₂ and R₃ are independently selected aromatic or substituted aromatic hydrocarbon radicals having from about 6 to about 20 carbon atoms, and which may be linked to each other by a table bridging group.

8. A process according to claim 2 wherein R₁, R₂ and R₃ are each a C₆F₅ group.

9. A process according to claim 1 wherein the reaction is carried out at a temperature higher than -100°C.

10. A process according to claim 1 wherein the subatmospheric pressure is less than about 100kPa.

11. A process according to claim 1 wherein the at least one cationically polymerizable olefin comprises a mixture of isobutylene and isoprene.

12. A process for the preparation of high molecular weight isobutylene-based polymers by polymerizing a cationically polymerizable olefin comprising the step of polymerizing isobutylene as at least one cationically polymerizable olefin in the presence of a cationic polymerization catalyst system which comprises an initiator and an activator, the activator being prepared by the reaction of a compound of formula :
(R₁R₂R₃)M
wherein
M is B, Al, Ga or In;
R₁, R₂ and R₃ are independently selected bridged or unbridged halide radicals, dialkylamido radicals, alkoxide and aryloxide radicals, hydrocarbyl and substituted-hydrocarbyl radicals, halocarbyl and substituted-halocarbyl radicals and hydrocarbyl and halocarbyl-substituted organometalloid radicals, with the proviso that not more than one such R group may be a halide radical;
with a co-initiator, the co-initiator being selected from the group consisting of an alcohol, a thiol, a carboxylic acid, a thiocarboxylic acid and whereby the co-initiator has at least 8 carbon atoms or is at least partially fluorinated, the reaction being carried out such that highly efficient cooling of the reaction mixture occurs.

## Patentansprüche

1. Verfahren zur Herstellung von hochmolekularen Polymeren auf Basis von Isobutylen durch Polymerisation eines kationisch polymerisierbaren Olefins, bei dem man Isobutylen als mindestens ein kationisch polymerisierbares Olefin bei Unterdruck in Gegenwart eines kationischen Polymerisationskatalysatorsystems, das einen Initiator und einen Aktivator umfaßt, die zusammen ein reaktives Kation und nichtkoordinierendes Anion bilden, polymerisiert, wobei der Aktivator durch Umsetzung einer Verbindung der Formel:
(R₁R₂R₃)M
worin:
M für B, Al, Ga oder In steht;
R₁, R₂ und R₃ unabhängig voneinander für verbrückte oder unverbrückte Halogenidreste, Dialkylamido- reste, Alkoxid- und Aryloxidreste, Hydrocarbyl- reste und substituierte Hydrocarbylreste, Halogencarbylreste und substituierte Halogen- carbylreste und hydrocarbyl- und halogencarbyl- substituierte Organometalloidreste stehen, mit der Maßgabe, daß nicht mehr als ein derartiger Rest für einen Halogenidrest stehen kann;
mit einem Coinitiator hergestellt wird, wobei der Coinitiator aus der Gruppe bestehend aus einem Alkohol, einem Thiol, einer Carbonsäure und einer Thiocarbonsäure ausgewählt wird und der Coinitiator mindestens 8 Kohlenstoffatome aufweist oder zumindest teilweise fluoriert ist.

2. Verfahren nach Anspruch 1, bei dem M für B steht.

3. Verfahren nach Anspruch 1, bei dem das Verhältnis von Coinitiator zu (R₁R₂R₃)M im Bereich von 0,01 : 1 bis 1 : 1 liegt.

4. Verfahren nach Anspruch 3, bei dem das Verhältnis von Coinitiator zu (R₁R₂R₃)M im Bereich von etwa 0,1 : 1 bis etwa 1 : 1 liegt.

5. Verfahren nach Anspruch 1, bei dem es sich bei dem reaktiven Kation um einen Cyclopentadienyl-Übergangsmetall-Komplex handelt.

6. Verfahren nach Anspruch 7, bei dem es sich bei dem Übergangsmetallkomplex um eine Verbindung aus der Gruppe bestehend aus: 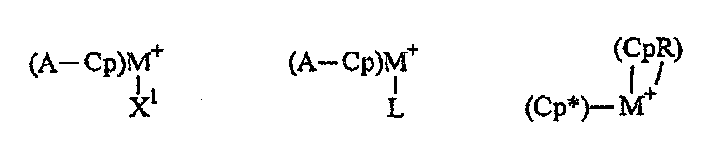 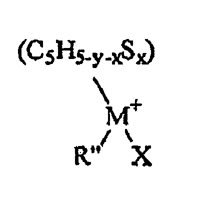 worin:
(A-Cp) entweder für (Cp)(Cp*) oder Cp-A'-Cp* steht;
Cp und Cp* für gleiche oder verschiedene Cyclo- pentadienylringe stehen, die mit 0 bis 5 Substituentengruppen S substituiert sind, wobei jede Substituentengruppe S unabhängig von- einander eine Restgruppe aus der Gruppe bestehend aus Hydrocarbyl-, substituierten Hydrocarbyl-, Halogencarbyl-, substituierten Halogencarbyl-, hydrocarbylsubstituierten Organometalloid-, halogencarbylsubstituierten Organometalloid-, disubstituierten Bor-, disubstituierten Pnictogen-, substituierten Chalkogen- oder Halogenresten ist, oder Cp und Cp* für Cyclopentadienylringe stehen, in denen zwei benachbarte S-Gruppen unter Bildung eines C₄- bis C₂₀-Ringsystems miteinander verbunden sind, was einen gesättigten oder ungesättigten polycyclischen Cyclopentadienylliganden ergibt;
R für einen Substituenten an einem der Cyclo- pentadienylreste steht, der auch an das Metallatom gebunden ist;
a' für eine Brückengruppe steht, die zur Einschränkung der Rotation der Cp- und Cp*- Ringe oder der (C₅H_{5-y-x}Sₓ)-Gruppen dienen kann;
M für ein Übergangsmetall der Gruppe 4, 5 oder 6 steht;
y für 0 oder 1 steht;
(C₅H_{5-y-x}Sₓ) für einen Cyclopentadienylring steht, der mit 0 bis 5 S-Resten substituiert ist;
x x für 0 bis 5 steht;
R" für eine Hydrocarbylgruppe steht;
X und X¹ unabhängig voneinander für einen Hydrid- rest, Hydrocarbylrest, substituierten Hydro- carbylrest, Halogencarbylrest, substituierten Halogencarbylrest, hydrocarbyl- und halogen- carbylsubstituierten Organometalloidrest, substituierten Pnictogenrest oder substituierte Chalkogenreste stehen und
L für einen Olefin-, Diolefin- oder Arinliganden oder eine neutrale Lewis-Base steht;
handelt.

7. Verfahren nach Anspruch 1, bei dem R₁, R₂ und R₃ für unabhängig voneinander ausgewählte aromatische oder substituierte aromatische Kohlenwasserstoffreste, die etwa 6 bis etwa 20 Kohlenstoffatome aufweisen und über eine stabile Brückengruppe miteinander verbunden sein können, stehen.

8. Verfahren nach Anspruch 2, bei dem R₁, R₂ und R₃ jeweils für eine C₆F₅-Gruppe stehen.

9. Verfahren nach Anspruch 1, bei dem man die Umsetzung bei einer Temperatur von mehr als -100°C durchführt.

10. Verfahren nach Anspruch 1, bei dem der Unterdruck weniger als etwa 100 kPa beträgt.

11. Verfahren nach Anspruch 1, bei dem das mindestens eine kationisch polymerisierbare Olefin eine Mischung von Isobutylen und Isopren umfaßt.

12. Verfahren zur Herstellung von hochmolekularen Polymeren auf Basis von Isobutylen durch Polymerisation eines kationisch polymerisierbaren Olefins, bei dem man Isobutylen als mindestens ein kationisch polymerisierbares Olefin in Gegenwart eines kationischen Polymerisationskatalysatorsystems, das einen Initiator und einen Aktivator umfaßt, polymerisiert, wobei der Aktivator durch Umsetzung einer Verbindung der Formel:
(R₁R₂R₃)M
worin:
M für B, Al, Ga oder In steht;
R₁, R₂ und R₃ unabhängig voneinander für verbrückte oder unverbrückte Halogenidreste, Dialkylamido- reste, Alkoxid- und Aryloxidreste, Hydrocarbyl- reste und substituierte Hydrocarbylreste, Halogencarbylreste und substituierte Halogen- carbylreste und hydrocarbyl- und halogencarbyl- substituierte Organometalloidreste stehen, mit der Maßgabe, daß nicht mehr als ein derartiger Rest für einen Halogenidrest stehen kann;
mit einem Coinitiator hergestellt wird, wobei der Coinitiator aus der Gruppe bestehend aus einem Alkohol, einem Thiol, einer Carbonsäure und einer Thiocarbonsäure ausgewählt wird und der Coinitiator mindestens 8 Kohlenstoffatome aufweist oder zumindest teilweise fluoriert ist, wobei die Umsetzung so durchgeführt wird, daß eine hocheffiziente Kühlung der Reaktionsmischung erfolgt.

## Revendications

1. Procédé de préparation de polymères à base d'isobutylène de masse moléculaire élevée par polymérisation d'une oléfine polymérisable par voie cationique, comprenant l'étape de polymérisation d'isobutylène en tant qu'au moins une oléfine polymérisable par voie cationique à une pression inférieure à la pression atmosphérique en présence d'un système catalyseur de polymérisation cationique qui comprend un amorceur et un activateur, qui forment ensemble un cation réactif et un anion qui n'est pas un anion de coordination, l'activateur étant préparé par la réaction d'un composé de formule :
(R₁R₂R₃)M
dans laquelle :
M représente B, Al, Ga ou In ;
R₁, R₂ et R₃ représentent, choisis indépendamment, des radicaux halogénure pontés ou non pontés, des radicaux dialkylamido, des radicaux alcoxyde et aryloxyde, des radicaux hydrocarbyle et hydrocarbyle substitué, des radicaux halogénocarbyle et halogénocarbyle substitué et des radicaux organométalloïdes hydrocarbyl- et halogénocarbyl-substitués, sous réserve que pas plus d'un de ces groupes R ne puisse être un radical halogénure ; avec un co-amorceur, le co-amorceur étant choisi dans le groupe constitué par un alcool, un thiol, un acide carboxylique, un acide thiocarboxylique et le co-amorceur comportant au moins 8 atomes de carbone ou étant au moins partiellement fluoré.

2. Procédé selon la revendication 1, dans lequel M représente B.

3. Procédé selon la revendication 1, dans lequel le rapport entre le co-amorceur et (R₁R₂R₃)M est sur la plage de 0,01/1 à 1/1.

4. Procédé selon la revendication 3, dans lequel le rapport entre le co-amorceur et (R₁R₂R₃)M est sur la plage d'environ 0,1/1 à environ 1/1.

5. Procédé selon la revendication 1, dans lequel le cation réactif est un complexe cyclopentadiényle-métal de transition.

6. Procédé selon la revendication 7, dans lequel le complexe de métal de transition est un composé choisi dans le groupe constitué par : 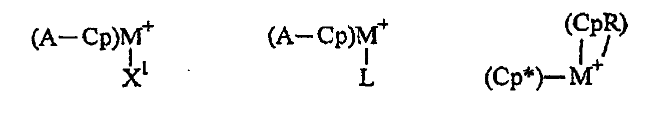 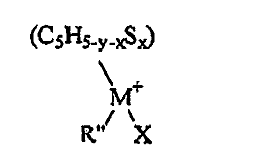 dans lequel:
(A-Cp) représente (Cp)(Cp*) ou Cp-A'-Cp*;
Cp et Cp* sont des noyaux cyclopentadiényle identiques ou différents substitués par 0 à 5 groupes substituants S, chaque groupe substituant S étant, indépendamment, un groupe radical choisi dans le groupe comprenant les radicaux hydrocarbyle, hydrocarbyle substitué, halogénocarbyle, halogénocarbyle substitué, organométalloïde hydrocarbyl-substitué, organométalloïde halogénocarbyl-substitué, bore disubstitué, pnictogène disubstitué, chalcogène substitué ou halogène, ou bien Cp et
Cp* représentent des noyaux cyclopentadiényle dans lesquels deux groupes S adjacents quelconques sont reliés pour former un système de noyau en C₄ à C₂₀ pour donner un ligand cyclopentadiényle polycyclique saturé ou insaturé ;
R représente un substituant sur un des radicaux cyclopentadiényle qui est également lié à l'atome de métal ;
A' représente un groupe pontant, lequel groupe peut servir à limiter la rotation des noyaux Cp et Cp* ou des groupes (C₅H_{5-y-x}Sₓ) ;
M représente un métal de transition du Groupe 4, 5 ou 6 ;
y est égal à 0 ou 1 ;
(C₅H_{5-y-}Sₓ) est un noyau cyclopentadiényle substitué par 0 à 5 radicaux S ;
x a une valeur de 0 à 5 ;
R" représente un groupe hydrocarbyle ;
X et X¹ représentent indépendamment un radical hydrure,
un radical hydrocarbyle, un radical hydrocarbyle substitué, un radical halogénocarbyle, un radical halogénocarbyle substitué, et un radical organométalloïde hydrocarbyl- et halogénocarbyl-substitué, un radical pnictogène substitué ou des radicaux chalcogène substitués ; et
L représente un ligand oléfine, dioléfine ou aryne,
ou une base de Lewis neutre.

7. Procédé selon la revendication 1, dans lequel R₁, R₂ et R₃ représentent, choisis indépendamment, des radicaux hydrocarbonés aromatiques ou aromatiques substitués comportant d'environ 6 à environ 20 atomes de carbone, et qui peuvent être reliés les uns aux autres par un groupe pontant de la table.

8. Procédé selon la revendication 2, dans lequel R₁, R₂ et R₃ représentent chacun un groupe C₆F₅.

9. Procédé selon la revendication 1, dans lequel la réaction est effectuée à une température supérieure à -100°C.

10. Procédé selon la revendication 1, dans lequel la pression inférieure à la pression atmosphérique est inférieure à environ 100 kPa.

11. Procédé selon la revendication 1, dans lequel la (au moins une) oléfine polymérisable par voie cationique comprend un mélange d'isobutylène et d'isoprène.

12. Procédé de préparation de polymères à base d'isobutylène de masse moléculaire élevée par polymérisation d'une oléfine polymérisable par voie cationique, comprenant l'étape de polymérisation d'isobutylène en tant qu'au moins une oléfine polymérisable par voie cationique en présence d'un système catalyseur de polymérisation cationique qui comprend un amorceur et un activateur, l'activateur étant préparé par la réaction d'un composé de formule :
(R₁R₂R₃)M
dans laquelle :
M représente B, Al, Ga ou In ;
R₁, R₂ et R₃ représentent, choisis indépendamment, des radicaux halogénure pontés ou non pontés, des radicaux dialkylamido, des radicaux alcoxyde et aryloxyde, des radicaux hydrocarbyle et hydrocarbyle substitué, des radicaux halogénocarbyle et halogénocarbyle substitué et des radicaux organométalloïdes hydrocarbyl- et halogénocarbyl-substitués, sous réserve que pas plus d'un de ces groupes R ne puisse être un radical halogénure ;
avec un co-amorceur, le co-amorceur étant choisi dans le groupe constitué par un alcool, un thiol, un acide carboxylique, un acide thiocarboxylique et le co-amorceur comportant au moins 8 atomes de carbone ou étant au moins partiellement fluoré, la réaction étant effectuée de façon à ce que se produise un refroidissement très efficace du mélange réactionnel.
